# EUROPEAN PATENT APPLICATION

(11) **EP 4 712 554 A1**
(43) Date of publication of application: **18.03.2026**
(21) Application number: 23936178.5
(22) Date of filing: 11.05.2023
(51) Int. Cl.: H04W 28/24

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); THOMAS, Emmanuel, Beijing 100085 (CN)
(74) Representative: Dehns Germany Partnerschaft mbB
(86) International application number: PCT/CN2023/093713
(87) International publication number: WO 2024/229865

(57) **Abstract**

Embodiments of the present disclosure provide an information processing method and apparatus, a communication device, and a storage medium. A core network device determines that a protocol data unit (PDU) does not have tag information of a PDU set, and merges the PDU into a PDU set associated with the PDU, wherein the tag information of the PDU set is at least used for determining a PDU set to which the PDU belongs.

## Description

### TECHNICAL FIELD

The present disclosure relates to, but is not limited to, the field of wireless communication technology, and particularly relates to an information processing method and apparatus, a communication device, and a storage medium.

### BACKGROUND

Extended reality (XR) services involve multimodal data flows. Multimodal data refers to data input from the same device or different devices (including sensors) for the same service/application. The data may be output to one or more destination device terminals. The data flows in multimodal data often have certain or even strong correlations, such as synchronization between an audio flow and a video flow, and synchronization between tactile sense and visual sense, etc. Some common characteristics exist in the data flow of this type of media service itself, between the data flows, and in the network transmission requirements of these service data flows. The effective identification and utilization of these characteristics will further facilitate network and service transmission and control, while also further facilitating service assurance and user experience.

### SUMMARY

Embodiments of the present disclosure provide an information processing method and apparatus, a communication device, and a storage medium.

In a first aspect of the embodiments of the present disclosure, there is provided an information processing method. The method is performed by a core network device, and includes:
determining that a protocol data unit (PDU) is not provided with PDU set marking information; and incorporating the PDU into a PDU set associated with the PDU, where the PDU set marking information is at least used for determining a PDU set to which the PDU belongs.

PDU set information is set for the PDU, where the PDU set information corresponds to the PDU set associated with the PDU.

In a second aspect of the embodiments of the present disclosure, there is provided an information processing method. The method is performed by an access network device, and includes:
receiving a PDU set sent by a core network device, where the PDU set includes a PDU not provided with PDU set marking information, and the PDU set marking information is at least used for determining a PDU set to which the PDU belongs.

PDU set information is set for the PDU, where the PDU set information corresponds to the PDU set associated with the PDU.

In a third aspect of the embodiments of the present disclosure, there is provided an information processing method. The method includes:
determining, by a core network device, that a PDU is not provided with PDU set marking information; incorporating, by the core network device, the PDU into a PDU set associated with the PDU; and sending, by the core network device, the PDU set to an access network device, where the PDU set marking information is at least used for determining a PDU set to which the PDU belongs; and
receiving, by the access network device, the PDU set sent by the core network device.

In a fourth aspect of the embodiments of the present disclosure, there is provided an information processing apparatus. The apparatus is provided in a core network device, and includes:
a processing module, configured to determine that a PDU is not provided with PDU set marking information, and incorporate the PDU into a PDU set associated with the PDU, where the PDU set marking information is at least used for determining a PDU set to which the PDU belongs.

PDU set information is set for the PDU, where the PDU set information corresponds to the PDU set associated with the PDU.

In a fifth aspect of the embodiments of the present disclosure, there is provided an information processing apparatus. The apparatus is provided in an access network device, and includes:
a transceiving module, configured to receive a PDU set sent by a core network device, where the PDU set includes a PDU not provided with PDU set marking information, and the PDU set marking information is at least used for determining a PDU set to which the PDU belongs.

PDU set information is set for the PDU, where the PDU set information corresponds to the PDU set associated with the PDU.

In a sixth aspect of the embodiments of the present disclosure, there is provided a communication system including a core network device and an access network device, where
the core network device is configured to perform the information processing method described in the first aspect; and
the access network device is configured to perform the information processing method described in the second aspect.

In a seventh aspect of the embodiments of the present disclosure, there is provided a communication device including a processor, a transceiver, a memory, and an executable program stored in the memory and executable by the processor, where the processor, when executing the executable program, performs the information processing method provided in the first aspect, the second aspect or the third aspect.

In an eighth aspect of the embodiments of the present disclosure, there is provided a computer storage medium. The computer storage medium stores an executable program, and the executable program, when executed by a processor, is capable of implementing the information processing method provided in the first aspect, the second aspect or the third aspect.

In the information processing method and apparatus, the communication device, and the storage medium provided in the embodiments of the present disclosure, the core network device determines that the PDU is not provided with the PDU set marking information, and incorporates the PDU into the PDU set associated with the PDU, where the PDU set marking information is at least used for determining the PDU set to which the PDU belongs. The user plane function (UPF) incorporates the PDU not provided with the PDU set marking information into the PDU set associated with the PDU, causing that the PDU is no longer treated as a separate PDU set in the quality of service (QoS) flow due to the inability to determine the PDU set. On the one hand, the PDU is incorporated into the associated PDU set, the QoS can be guaranteed based on the QoS profile and the QoS parameter of the associated PDU set, reducing the uncertainty in the execution policy of the QoS profile and the QoS parameter caused by the PDU being treated as a separate PDU set. On the other hand, the processing complexity caused by the PDU being treated as a separate PDU set is reduced, and the PDU transmission efficiency is improved.

For the technical solution provided in the embodiments of the present disclosure, it should be understood that the general description above and the detailed description in the following are only exemplary and explanatory, and cannot limit the embodiments of the present disclosure.

### BRIEF DESCRIPTION OF THE DRAWINGS

The accompanying drawings herein are incorporated into the specification and form a part of the specification, illustrate the embodiments in accordance with the present invention, and are used together with the specification to explain the principles of the embodiments of the present invention.
FIG. 1 is a schematic structure diagram of a wireless communication system illustrated according to an exemplary embodiment.
FIG. 2 is a schematic flow diagram of information processing illustrated according to an exemplary embodiment.
FIG. 3 is a schematic flow diagram of information processing illustrated according to an exemplary embodiment.
FIG. 4 is a schematic flow diagram of information processing illustrated according to an exemplary embodiment.
FIG. 5 is a schematic flow diagram of information processing illustrated according to an exemplary embodiment.
FIG. 6 is a schematic flow diagram of information processing illustrated according to an exemplary embodiment.
FIG. 7 is a schematic flow diagram of information processing illustrated according to an exemplary embodiment.
FIG. 8 is a schematic flow diagram of information processing illustrated according to an exemplary embodiment.
FIG. 9 is a schematic flow diagram of information processing illustrated according to an exemplary embodiment.
FIG. 10 is a schematic flow diagram of information processing illustrated according to an exemplary embodiment.
FIG. 11 is a schematic flow diagram of information processing illustrated according to an exemplary embodiment.
FIG. 12 is a schematic flow diagram of information processing illustrated according to an exemplary embodiment.
FIG. 13 is a schematic flow diagram of information processing illustrated according to an exemplary embodiment.
FIG. 14 is a schematic flow diagram of information processing illustrated according to an exemplary embodiment.
FIG. 15 is a schematic structure diagram of an information processing apparatus illustrated according to an exemplary embodiment.
FIG. 16 is a schematic structure diagram of an information processing apparatus illustrated according to an exemplary embodiment.
FIG. 17 is a schematic structure diagram of a UE illustrated according to an exemplary embodiment.
FIG. 18 is a schematic structure diagram of a communication device illustrated according to an exemplary embodiment.

### DETAILED DESCRIPTION

The exemplary embodiments are described in detail herein, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present invention. On the contrary, they are only examples of devices and methods consistent with some aspects of the embodiments of the present invention.

In the embodiments of the present disclosure, the terms as used are solely for the purpose of describing particular embodiments, but are not intended to limit the embodiments of the present disclosure. The singular forms of "a", "the" and "said" used in the present disclosure are also intended to include the plural form, unless the context clearly indicates other meanings. It should also be understood that the term "and/or" as used in this article refers to and includes any or all possible combinations of one or more of the associated listed items.

It should be understood that although the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, the first information may also be referred to as the second information, and similarly, the second information may also be referred to as the first information. Depending on the context, for example, the phrase "if" as used herein may be interpreted as "at the time of......", "when ......", or "in response to determining".

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)", etc. may be interchangeable with each other.

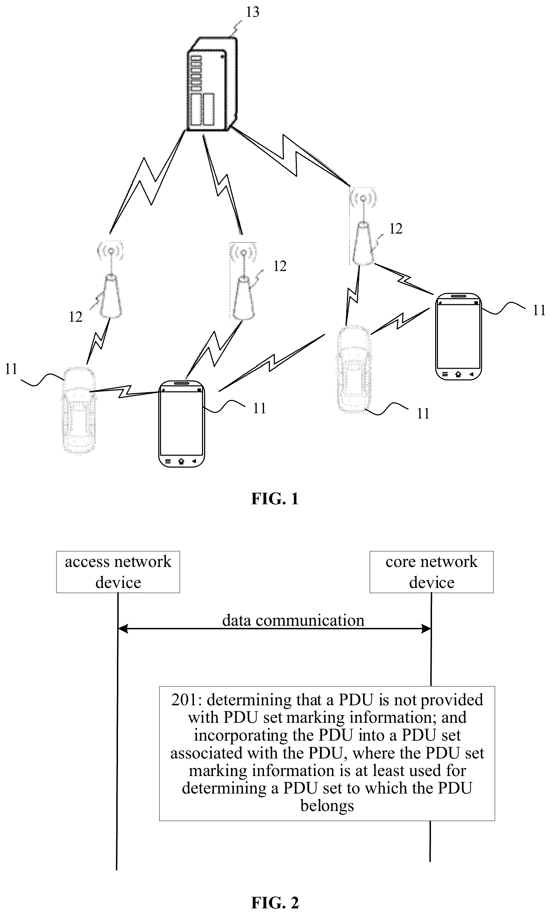

Referring to FIG. 1, a schematic structure diagram of a wireless communication system provided in an embodiment of the present disclosure is shown. As shown in FIG. 1, the wireless communication system is a communication system based on cellular mobile communication technology. The wireless communication system may include one or more user equipment (UEs) 11 and one or more network devices 12.

In some embodiments, the wireless communication system may be the 4th generation mobile communication (4G) system, also referred to as the long term evolution (LTE) system; or the wireless communication system may also be the 5G system, also referred to as the new radio (NR) system or the 5G NR system. Alternatively, the wireless communication system may be a next generation system of the 5G system, etc. In some embodiments, the access network in the 5G system may be referred to as the new generation-radio access network (NG-RAN). Alternatively, the wireless communication system may be an MTC system.

In some embodiments, the UE 11 may refer to a device that provides voice and/or data connectivity to a user. The UE 11 may communicate with one or more core networks via a radio access network (RAN). The UE 11 may be an Internet of Things (IoT) UE, such as a sensor device, a mobile phone (or referred to as a cellular phone), or a computer with an IoT UE. For example, the UE 11 may be a fixed, portable, pocket, handheld, computer built-in, or vehicle-mounted device. For example, the UE 11 may be a station (STA), a subscriber unit, a subscriber station, a mobile station, a mobile, a remote station, an access point, a remote UE (remote terminal), an access UE (access terminal), a user apparatus (user terminal), a user agent, a user device, or a user equipment (UE). Or, the UE 11 may be a device of an unmanned aerial vehicle. Or, the UE 11 may be a vehicle-mounted device, such as a trip computer with wireless communication functions, or a wireless communication device externally connected to a trip computer. Or, the UE 11 may be a road side device, such as a street light, a signal light, or other road side devices with wireless communication functions.

The network device 12 may include an access network device. Optionally, the network device 12 may include a core network device. In some embodiments, the access network device may be an evolved access device (eNB) used in the 4G system. Or, the access network device may be an access device (gNB) with a centralized distributed architecture in the 5G system. When adopting the centralized distributed architecture, the access network device typically includes a central unit (CU) and at least two distributed units (DUs). The central unit is provided with a protocol stack of a packet data convergence protocol (PDCP) layer, a radio link control (RLC) layer, and a media access control (MAC) layer. The distributed unit is provided with a protocol stack of a physical (PHY) layer. The embodiments of the present disclosure do not limit the specific implementations of the access network device.

A wireless connection may be established between the network device 12 and the UE 11 via a wireless air interface. In a different embodiment, the wireless air interface is a wireless air interface based on the fourth generation mobile communication network technology (4G) standard. Or, the wireless air interface is a wireless air interface based on the fifth generation mobile communication network technology (5G) standard, for example, the wireless air interface is a new air interface. Or, the wireless air interface may also be a wireless air interface based on a next generation mobile communication network technology standard of the 5G.

In some examples, the access device 12 may be an access device of a terrestrial network (TN), or a non-terrestrial network (NTN) device with all functions of the access network or a portion of the functions of the access network.

The NTN device may be a satellite, a high altitude platform system (HAPS), or an air to ground (ATG) device deployed in the NTN.

For example, the access device 12 may be located in a communication system integrated with a satellite communication system, and can provide connectivity services for satellites, allowing the satellites to access the core network. For example, the access device 12 may be an access device with satellite gateway functions in the communication system, such as a gateway device, a ground station device, a non-terrestrial networks gateway (NTN-gateway)/satellite gateway, etc.

For example, the wireless communication system described above may also include a core network device 13. One or more access devices 12 are connected to the core network device 13 respectively. The core network device 13 may be an access and mobility management function (AMF) 131, a session management function (SMF) 132, a user plane function (UPF) 133, a policy control function (PCF) 134, etc. The implementation form of the core network device 13 is not limited in the embodiments of the present disclosure.

In some embodiments, the AMF, the UPF, the PCF, etc. in the embodiments of the present disclosure may be implemented by one entity device or jointly implemented by a plurality of entity devices. It can be understood that each of the AMF, the UPF, and the PCF, etc. in the embodiments of the present disclosure may be a logical function module in an entity device, or a logical function module composed of a plurality of entity devices, which is not limited in the embodiments of the present disclosure.

It should be noted that the network architecture shown in FIG. 1 is only an example applicable to the embodiments of the present disclosure, and does not constitute a limitation on the application scope of the embodiments of the present disclosure.

In order to facilitate the understanding of those skilled in the art, the embodiments of the present disclosure enumerate a plurality of embodiments to provide a clear description of the technical solutions of the embodiments of the present disclosure. Of course, those skilled in the art can understand that the plurality of embodiments provided in the embodiments of the present disclosure may be performed individually or in combination with the methods of other embodiments in the embodiments of the present disclosure, or may be performed individually or in combination with some methods of other related arts. The embodiments of the present disclosure do not make limitations on this.

The extended reality media (XRM) service and the interactive media service require the communication system (such as the 5G system) to comprehensively consider the QoS characteristics of the relevant data flows of the service, for example, whether the delay critical guaranteed bit rate (GBR), the guaranteed flow bit rate (GFBR), the packet delay budget (PDB), the default maximum data burst volume (MDBV), etc. can be simultaneously satisfied and coordinated. In some embodiments, the consistency assurance of QoS authorization and enforcement for a plurality of XRM data flows of a single UE and XRM data flows of a plurality of UEs is involved.

The 5G communication system supports the functional enhancement of the application function (AF) for granularity processing of the XRM service data flow (SDF) PDU set to support the QoS awareness and assurance enhancement of the AF for the XRM service data flow, and the quality of experience (QoE) enhancement of the user. This includes the AF providing the PDU set specific QoS characteristics and protocol description.

The PDU set specific QoS characteristics include the PDU set delay budget (PSDB), the PDU set error rate (PSER), and the PDU set integrated handling information (PSIHI).

The SMF and the UPF may execute the GTP-U header extension of the corresponding PDU in the PDU set of the corresponding SDF based on the protocol header extension and the protocol description provided by the AF, carrying the PDU set information. In some embodiments, the PDU set information is used by the NG-RAN for the PDU set based QoS handling. The PDU set information may include:
a PDU set sequence number; an indication of an end PDU of the PDU set; a PDU sequence number within a PDU set; a PDU set size in bytes, a PDU set importance used for identifying the relative importance of the PDU set compared to other PDU sets in the QoS flow.

The UPF will execute the mapping of AF's SDF to QoS flow based on the PDR rule, encapsulate the associated PDU into a PDU set, and execute the set specific relevant QoS policies such as PSER and PSDB for the PDU set in the QoS flow.

In a possible implementation, there may be a PDU in the SDF that is classified into the non-media group, meaning that the PDU does not have a corresponding PDU set. For example, the UPF maps the SDF to the QoS flow based on the packet detection information in the PDR. Some PDUs in the QoS flow will be associated with media components (e.g., I-frames and P-frames), and will be classified by the UPF as belonging to the corresponding PDU sets and processed accordingly. However, for the PDU that does not include the identifiable user media component, there is currently no solution. This leads to uncertainty in the execution policy of the QoS profile and the QoS parameters of the QoS flow, making it impossible to guarantee the QoS of the QoS flow.

Therefore, as shown in FIGS. 2 to 12, the embodiments of the present disclosure provide an information processing method, which can incorporate the PDU not provided with the corresponding PDU set into the associated PDU.

As shown in FIG. 2, an embodiment of the present disclosure provides an information processing method. The method is performed by a core network device, and includes the following step 201.

At step 201, it is determined that a PDU is not provided with PDU set marking information, and the PDU is incorporated into a PDU set associated with the PDU, where the PDU set marking information is at least used for determining a PDU set to which the PDU belongs.

In a possible implementation, the PDU set includes an end of bursts. One data burst includes one or more PDU sets.

In a possible implementation, the core network device may include a UPF. The information processing method may be performed by the UPF in the core network.

In a possible implementation, the PDU associated with the SDF may be sent to the UPF by the access stratum (AS) or other means.

In a possible implementation, the PDUs sent by the AS to the UPF may all have PDU set marking information used for determining the PDU set to which the PDU belongs. It is also possible that one or more PDUs of all the PDUs sent by the AS to the UPF are not provided with the PDU set marking information.

Here, the SDF may include the SDF of the XRM.

In a possible implementation, the PDU set marking information may indicate the PDU set to which the PDU belongs, for example, indicating the identification information of the PDU set, e.g., the sequence number of the PDU set.

If the PDU is not provided with the PDU set marking information, that is, the PDU does not have a PDU set it belongs to. Then, the PDU may be separately added to the QoS flow. Alternatively, the PDU may be separately determined as a PDU set. Since the PDUs in the QoS flow are usually transmitted in the form of the PDU set, a PDU added separately to the QoS flow without belonging to any PDU set lacks protocol support. If a PDU is separately determined as a PDU set, it will bring uncertainty in the execution policy of the QoS profile and the QoS parameter.

In this embodiment, unless otherwise specified, an independent PDU indicates a PDU not provided with the PDU set marking information.

Here, if the UPF receives an independent PDU, the UPF may incorporate the PDU into the PDU set associated with the PDU. Here, the PDU set associated with the PDU may be an existing PDU set.

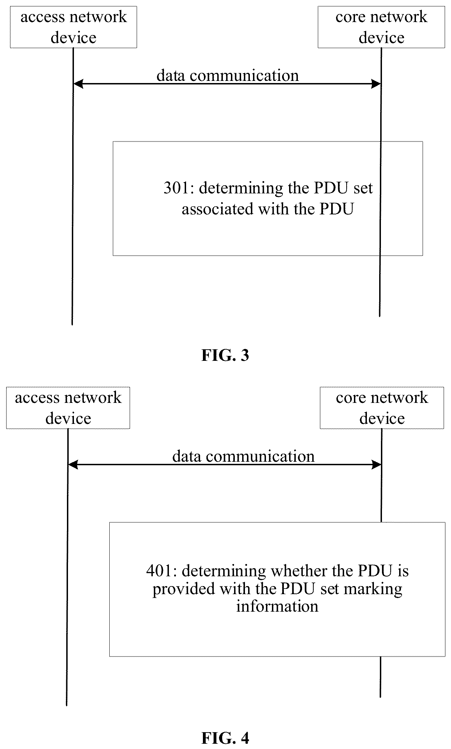

As shown in FIG. 3, an embodiment of the present disclosure provides an information processing method. The method is performed by the core network device, and includes the following step 301.

At step 301, the PDU set associated with the PDU is determined.

In a possible implementation, the UPF may determine the PDU set associated with the independent PDU after receiving the independent PDU.

In a possible implementation, the PDU set associated with the PDU may be determined by the UPF through a predetermined determination rule. For example, the UPF may determine the PDU set that arrives at the UPF within a predetermined time period as the PDU set associated with the PDU. The predetermined time period may be a time period within a predetermined duration range from the arrival time of the PDU at the UPF.

In a possible implementation, the PDU set associated with the PDU may be a PDU set belonging to the same QoS flow as the PDU.

In a possible implementation, the PDU set associated with the PDU may be pre specified. For example, after the PDU arrives at the UPF, the UPF may specify the PDU set associated with the PDU.

In a possible implementation, the UPF may incorporate the PDU into the PDU set by adding in the PDU the indication information of the PDU set associated with the PDU.

In a possible implementation, adding in the PDU the indication information of the PDU set associated with the PDU may include adding a GTP-U header extension in the PDU, where the GTP-U header extension may carry the PDU set information of the PDU set associated with the PDU.

The UPF incorporates the independent PDU into the PDU set associated with the PDU, causing that the PDU is no longer treated as a separate PDU set in the QoS flow due to the inability to determine the PDU set. On the one hand, the PDU is incorporated into the associated PDU set, the QoS can be guaranteed based on the QoS profile and the QoS parameter of the associated PDU set, reducing the uncertainty in the execution policy of the QoS profile and the QoS parameter caused by the PDU being treated as a separate PDU set. On the other hand, the processing complexity caused by the PDU being treated as a separate PDU set is reduced, and the PDU transmission efficiency is improved.

In an embodiment, incorporating the PDU into the PDU set associated with the PDU includes:
setting PDU set information for the PDU, where the PDU set information corresponds to the PDU set associated with the PDU.

In a possible implementation, the UPF may set the PDU set information for the independent PDU.

The PDU set information may be used for determining the PDU set associated with the PDU.

In a possible implementation, the PDU set information may be set in the GTP-U header of the PDU.

In a possible implementation, the UPF may identify and send the PDU with the GTP-U header to the radio access network, and the PDU set information in the GTP-U may be used for the radio access network and the like to determine the PDU set to which the PDU belongs.

In an embodiment, the PDU set information is at least used for indicating one of the following:
a PDU set sequence number; an indication of an end PDU of the PDU set; a PDU sequence number within the PDU set; a PDU set size in bytes; a PDU set importance value; a sequence number of a start PDU of the PDU set; a sequence number of the end PDU of the PDU set; the number of PDUs in the PDU set; whether a PDU associated with the PDU set information is a PDU incorporated into the PDU set; and an end of a data burst.

The QoS flow identification is used for identifying the QoS flow. Each PDU set in the QoS flow is identified by a PDU set sequence number. Each QoS flow may be used for transmitting one or more PDU sets.

For the independent PDU, after the independent PDU is incorporated into the associated PDU set, an identification may be set in the PDU set information of the PDU to indicate that the PDU is incorporated into the PDU set. That is, the PDU set information may indicate not only the PDU set of the PDU, but also whether the PDU is incorporated into the PDU set by the UPF.

As shown in FIG. 4, an embodiment of the present disclosure provides an information processing method. The method is performed by the core network device, and includes the following step 401.

At step 401, whether the PDU is provided with the PDU set marking information is determined.

In a possible implementation, the PDU associated with the SDF may be sent to the UPF by the AS, etc. The PDU may or may not be provided with the PDU set marking information.

The UPF may determine whether the received PDU is provided with the PDU set marking information.

In a possible implementation, the UPF may check whether the packet header of the PDU is provided with the PDU set marking information.

In a possible implementation, the PDU is provided with the PDU set marking information, and the UPF may determine the PDU set to which the PDU belongs based on the PDU set marking information.

In a possible implementation, the PDU is not provided with the PDU set marking information, and the UPF incorporates the PDU into the PDU set associated with the PDU.

In an embodiment, the PDU set marking information includes a header extension field/parameter of the PDU, where the header extension is used for indicating at least one of the following:
an end PDU of the PDU set; an end of a data burst; a PDU set importance value; a PDU set sequence number; a PDU sequence number within the PDU set; and a PDU set size in bytes.

In a possible implementation, the header extension is used for the UPF to determine the PDU set to which the PDU belongs. The UPF may determine the PDU set to which the PDU belongs based on the header extension of the PDU.

In a possible implementation, the UPF may interpret the header extension based on the protocol description and/or the PDR used for identifying the PDU set, and determine the PDU set to which the PDU belongs based on the interpreted header extension.

The UPF may determine, based on whether the PDU is provided with the PDU set marking information, whether the PDU is provided with a PDU set to which the PDU belongs.

By determining whether the PDU is provided with the PDU set marking information, the core network device may classify PDUs with and without PDU sets, and further process the PDU without the PDU set, reducing the uncertainty in the execution policy of the QoS profile and the QoS parameter caused by the unified processing of PDUs with and without PDU sets, which cannot guarantee the QoS of the QoS flow.

In an embodiment, the PDU set associated with the PDU is determined based on one of the following:
a protocol description associated with the PDU sent by an AF; and
packet header information of the PDU.

In a possible implementation, the PDU set associated with the PDU may be determined based on the protocol description associated with the PDU and/or the packet header information of the PDU.

In a possible implementation, the header extension of the PDU may be in the packet header information of the PDU, or the header extension of the PDU may be outside the packet header information of the PDU. The header extension of PDU is used for extending information outside the packet header information of the traditional PDU. For example, the protocol description associated with the PDU and/or the packet header information of the PDU may be used for carrying indication information that determines the PDU set associated with the PDU, such as the PDU's SDF, QoS parameters, etc. The core network device may determine the PDU set associated with the PDU based on the indication information.

In an embodiment, incorporating the PDU into the PDU set associated with the PDU includes one of the following:
determining that the PDU is associated with a plurality of PDU sets, duplicating the PDU into a plurality of PDUs, and incorporating the plurality of PDUs into all of the plurality of PDU sets associated with the PDU; and
determining that the PDU is associated with a plurality of PDU sets, and incorporating the PDU into a PDU set, in the plurality of PDU sets associated with the PDU, having a predetermined association relationship.

In a possible implementation, if there is one PDU set associated with the independent PDU, the PDU may be incorporated into that PDU set.

In a possible implementation, if the PDU needs to be incorporated into a plurality of PDU sets, the PDU may be duplicated into a plurality of PDUs, and each of the plurality of PDUs is incorporated into one of the plurality of PDU sets.

In an embodiment, the predetermined association relationship includes at least one of the following:
a time difference between a first time point at which a PDU set associated with the PDU arrives at the core network device and a second time point at which the PDU arrives at the core network device being within a predetermined time difference range;
having a predetermined association value or having a predetermined importance value, where the predetermined association value or the predetermined importance value is indicated by one of: a UPF, a PCF, and an AF;
a PDU set indicated by the UPF; and
a PDU set indicated by the AF.

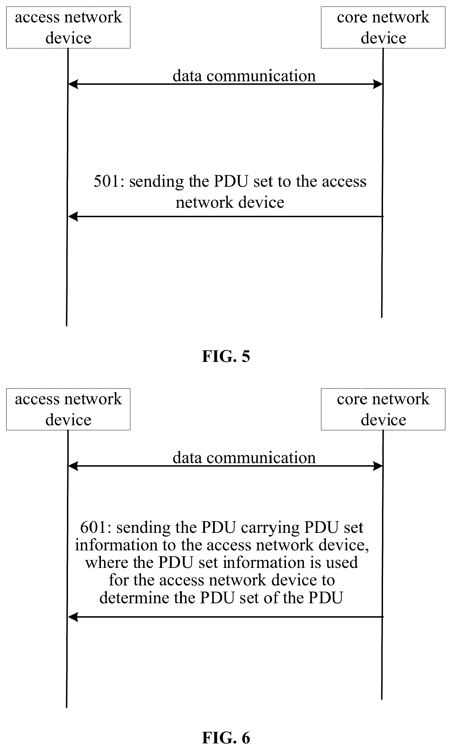

As shown in FIG. 5, an embodiment of the present disclosure provides an information processing method. The method is performed by the core network device, and includes the following step 501.

At step 501, the PDU set is sent to an access network device. In some embodiments, the PDU set includes at least one PDU.

In a possible implementation, the way the UPF sends the PDU set to the access network device may be that the UPF sends one or more PDUs to the access network device, where each PDU carries the PDU set information used for indicating the PDU set of the PDU. The access network device determines, through the PDU set information carried in the PDU, the PDU set to which the PDU belongs.

In a possible implementation, the PDU set information indicating the PDU set to which the PDU belongs may be carried in the GTP-U header extension of the PDU.

As shown in FIG. 6, an embodiment of the present disclosure provides an information processing method. The method is performed by the core network device, and includes the following step 601.

At step 601, the PDU carrying the PDU set information is sent to the access network device, where the PDU set information is used for the access network device to determine the PDU set of the PDU.

When sending the PDU to the radio access network function, the UPF may simultaneously send the PDU set information of the PDU. In some embodiments, the PDU set information is determined by the UPF at least based on the protocol description, and the QoS parameter, etc. of the PDU set of the PDU.

In a possible implementation, the UPF adds the PDU set information to the GTP-U of the PDU.

The access network device obtains the PDU set information from the GTP-U header of the PDU as received, and then determines the PDU set to which the PDU belongs. The radio access network function may perform, on the PDU, the PDU set based QoS handling.

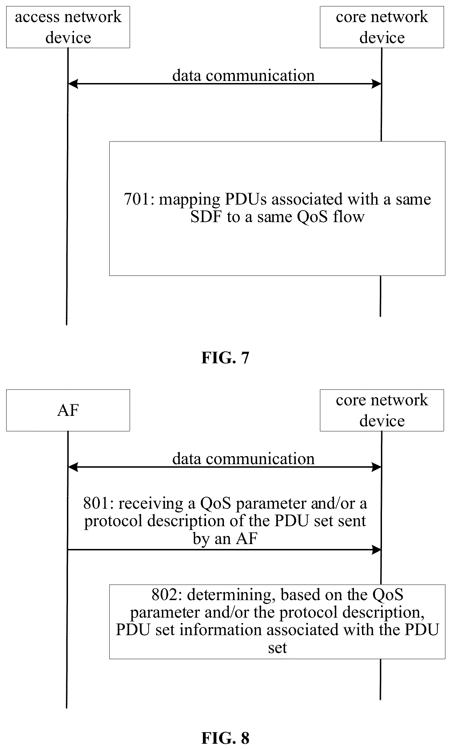

As shown in FIG. 7, an embodiment of the present disclosure provides an information processing method. The method is performed by the core network device, and includes the following step 701.

At step 701, PDUs associated with a same SDF are mapped to a same QoS flow.

In an embodiment, the SMF may configure a same QoS parameter for all PDU sets in the same QoS flow.

When configuring the PDU set, the UPF may map all PDUs belonging to the same SDF to the same QoS flow.

For example, for the real-time imaging service, the same QoS flow may be configured for the PDU sets of the service. The UPF may map the PDUs of the same SDF to one QoS flow. In this way, the QoS parameters of all PDUs of the SDF are the same. For example, the PDU sets of the same SDF may have the same latency requirement, which reduces latency and improves the synchronization level of the real-time imaging service.

At the same time, in the same QoS flow, the UPF may configure each PDU set to use the same QoS parameter, reducing the processing complexity.

As shown in FIG. 8, an embodiment of the present disclosure provides an information processing method. The method is performed by the core network device, and includes the following steps 801 to 802.

At step 801, a QoS parameter and/or a protocol description of the PDU set sent by an AF is received.

At step 802, the PDU set information associated with the PDU set is determined based on the QoS parameter and/or the protocol description.

In a possible implementation, the QoS parameter may be carried in the PDU set related auxiliary information.

In a possible implementation, the QoS parameter may be carried in the PDU set related auxiliary information and sent to the core network device.

The PDU set related auxiliary information may be used for indicating the QoS parameter of the PDU set for different QoS flows.

In a possible implementation, the QoS parameter includes, but is not limited to, one of the following:
an PDU set handling indication (indicating whether the PDU set based handling should be activated for the data flow), where the PDU set handling indication may also be implicitly indicated through any PDU set related association information provided by the AF; whether the application layer requires all PDUs to use the PDU sets; the PDU set DBP; and the PDU set error rate.

In a possible implementation, the PDU set information may be set in the PDU of the PDU set for the network device to identify the PDU set to which the PDU belongs.

The PDU set information may include at least one of the following: a PDU set sequence number; an indication of an end PDU of the PDU set; a PDU sequence number within a PDU set; a PDU set Size in bytes; a PDU set importance, used for identifying the relative importance of the PDU set compared to other PDU sets in the QoS flow; a sequence number of a start PDU and a sequence number of an end PDU in the PDU set, here, each QoS flow has a QoS flow representation, each PDU set in the QoS flow is identified by a PDU set sequence number, and each QoS flow may be used for transmitting one or more sets of PDUs; the number of PDUs in the PDU set; a PDU set importance; and an end of a data burst.

In an embodiment, receiving the QoS parameter and/or the protocol description of the PDU set sent by the AF includes:
receiving, by a PCF, the QoS parameter and/or the protocol description of the PDU set sent by the AF.

Determining, based on the QoS parameter and/or the protocol description, the PDU set information associated with the PDU set includes:
determining, by the PCF based on the QoS parameter and/or the protocol description, a policy and charging control (PCC) rule associated with the PDU set, and sending, by the PCF, the PCC rule to an SMF;
determining, by the SMF based on the PCC rule, an N4 rule associated with the PDU set, and sending, by the SMF, the N4 rule to the UPF; and
determining, by the UPF based on the N4 rule, the PDU set information associated with the PDU set.

The AF may send to the PCF the QoS parameter and/or the protocol description through the Nnef_AFsessionWithQoS_Create request.

The AF may also provide the QoS parameter and/or the protocol description to the PCF before a PDU session is established. The QoS parameter and/or the protocol description of the PDU set provided by the AF may be used for the PCF to determine the PCC rule.

When performing the PDU set based QoS handling for the SDF, the PCF may generate, based on the QoS parameter and/or the protocol description, the PCC rule including the PDU set QoS parameter (such as PSER, PSDB, and PSIHI), and send the PCC rule to the SMF, and the SMF determines the N4 rule based on the PCC rule.

In a possible implementation, the SMF may be configured to support the QoS of the PDU set in the case where the SMF does not receive the PCC rule from the PCF. For example, the SMF may configure the N4 rule based on the general QoS parameter of the PDU set when the PCC associated with the PDU set is not received.

The N4 rule is used for the UPF to perform the QoS handling of the PDU set.

Based on the N4 rule, the UPF may identify the PDU set to which each PDU belongs, and the PDU set information of each PDU set.

In a possible implementation, the UPF determines the PDU set information through one of the following:
matching the RTP/STP header and the payload; matching the new RTP extension header; the information provided by the AS in the N6 encapsulation header; the detection based on the traffic characteristic; and the implementation based on the UPF local configuration.

In a possible implementation, the PCF may receive, during the PDU session establishment and/or the PDU session modification, the QoS parameter and/or the protocol description of the PDU set sent by the AF, and determine the PCC; and the SMF determines the N4 rule based on the PCC.

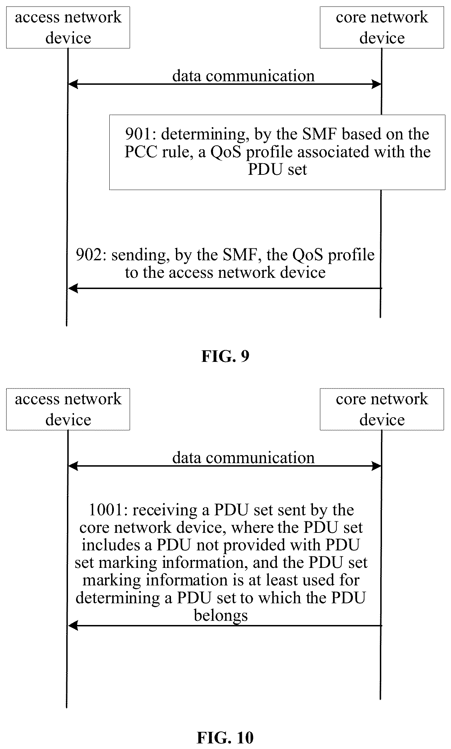

As shown in FIG. 9, an embodiment of the present disclosure provides an information processing method. The method is performed by the core network device, and includes the following steps 901 to 902.

At step 901, the SMF determines, based on the PCC rule, a QoS profile associated with the PDU set.

At step 902, the SMF sends the QoS profile to the access network device.

In a possible implementation, the QoS profile may include the QoS parameter and/or the QoS policy and/or the protocol description associated with the PDU set.

In a possible implementation, sending, by the SMF, the QoS profile to the access network device includes at least one of the following:
sending, by the SMF, the QoS profile to the access network device via the AMF;
alternatively, via the UPF, where the UPF may send the QoS profile to the RAN via the downlink GTP-U header of the PDU.

When performing the PDU set based QoS handling for the SDF, the PCF may generate, based on the QoS parameter and/or the protocol description, the PCC rule including the PDU set QoS parameter (such as PSER, PSDB, and PSIHI), and send the PCC rule to the SMF, and the SMF determines the QoS profile based on the PCC rule.

In a possible implementation, the SMF may be configured to support the QoS of the PDU set in the case where the SMF does not receive the PCC rule from the PCF. For example, the SMF may determine the QoS profile based on the general QoS parameter of the PDU set when the PCC associated with the PDU set is not received.

The QoS profile is used for the access network device to determine the QoS parameter and the like of the PDU set.

As shown in FIG. 10, an embodiment of the present disclosure provides an information processing method. The method is performed by an access network function node, and includes the following step 1001.

At step 1001, a PDU set sent by a core network device is received, where the PDU set includes a PDU not provided with PDU set marking information, and the PDU set marking information is at least used for determining a PDU set to which the PDU belongs.

In a possible implementation, the way the UPF sends the PDU set to the access network device may be that the UPF sends one or more PDUs to the access network device, where each PDU carries the PDU set information used for indicating the PDU set of the PDU. The access network device determines, through the PDU set information carried in the PDU, the PDU set to which the PDU belongs.

In a possible implementation, the PDU set information may be carried in the GTP-U header extension of the PDU.

In a possible implementation, the PDU set marking information may indicate the PDU set to which the PDU belongs, for example, indicating the identification information of the PDU set, e.g., the sequence number of the PDU set.

If the PDU is not provided with the PDU set marking information, that is, the PDU does not have a PDU set it belongs to. Then, the PDU may be separately added to the QoS flow. Alternatively, the PDU may be separately determined as a PDU set. Since the PDUs in the QoS flow are usually transmitted in the form of the PDU set, a PDU added separately to the QoS flow without belonging to any PDU set lacks protocol support. If a PDU is separately determined as a PDU set, it will bring uncertainty in the execution policy of the QoS profile and the QoS parameter.

The PDU not provided with the PDU set marking information in the PDU set may be incorporated into the PDU set by the UPF.

On the one hand, the PDU is incorporated into the associated PDU set, the QoS can be guaranteed based on the QoS profile and the QoS parameter of the associated PDU set, reducing the uncertainty in the execution policy of the QoS profile and the QoS parameter caused by the PDU being treated as a separate PDU set. On the other hand, the processing complexity caused by the PDU being treated as a separate PDU set is reduced, and the PDU transmission efficiency is improved.

In an embodiment, the PDU is incorporated by the core network device into the PDU set associated with the PDU.

In a possible implementation, the form of the PDU set is as described in step 201, which will not be repeated here.

In a possible implementation, the core network device may include a UPF. The information processing method may be performed by the UPF in the core network.

In a possible implementation, the PDU associated with the SDF may be sent to the UPF by the AS or other means. The PDU may or may not be provided with the PDU set marking information.

In a possible implementation, the PDU set marking information may indicate the PDU set to which the PDU belongs, for example, indicating the identification information of the PDU set, e.g., the sequence number of the PDU set.

If the PDU is not provided with the PDU set marking information, that is, the PDU does not have a PDU set it belongs to. Then, the PDU may be separately added to the QoS flow. Alternatively, the PDU may be separately determined as a PDU set. Since the PDUs in the QoS flow are usually transmitted in the form of the PDU set, a PDU added separately to the QoS flow without belonging to any PDU set lacks protocol support. If a PDU is separately determined as a PDU set, it will bring uncertainty in the execution policy of the QoS profile and the QoS parameters.

Here, if the UPF receives an independent PDU, the UPF may incorporate the PDU into the PDU set associated with the PDU. Here, the PDU set associated with the PDU may be an existing PDU set.

In a possible implementation, the PDU set associated with the PDU may be determined by the UPF.

In a possible implementation, the UPF may determine the PDU set associated with the independent PDU after receiving the independent PDU.

In a possible implementation, the PDU set associated with the PDU may be determined by the UPF through a predetermined determination rule. For example, the UPF may determine the PDU set that arrives at the UPF within a predetermined time period as the PDU set associated with the PDU. The predetermined time period may be a time period within a predetermined duration range from the arrival time of the PDU at the UPF.

In a possible implementation, the PDU set associated with the PDU may be a PDU set belonging to the same QoS flow as the PDU.

In a possible implementation, the PDU set associated with the PDU may be pre specified. For example, after the PDU arrives at the UPF, the UPF may specify the PDU set associated with the PDU.

In a possible implementation, incorporating the PDU into the associated PDU set may include adding in the PDU the indication information of the PDU set associated with the PDU.

In a possible implementation, adding in the PDU the indication information of the PDU set associated with the PDU may include adding a GTP-U header extension in the PDU, where the GTP-U header extension may carry the PDU set information of the PDU set associated with the PDU.

The UPF incorporates the independent PDU into the PDU set associated with the PDU, causing that the PDU is no longer treated as a separate PDU set in the QoS flow due to the inability to determine the PDU set. On the one hand, the PDU is incorporated into the associated PDU set, the QoS can be guaranteed based on the QoS profile and the QoS parameter of the associated PDU set, reducing the uncertainty in the execution policy of the QoS profile and the QoS parameter caused by the PDU being treated as a separate PDU set. On the other hand, the processing complexity caused by the PDU being treated as a separate PDU set is reduced, and the PDU transmission efficiency is improved.

In an embodiment, the PDU is incorporated by the core network device into the PDU set associated with the PDU, which includes:
setting, by the core network device, PDU set information for the PDU, where the PDU set information corresponds to the PDU set associated with the PDU.

In a possible implementation, the UPF may set the PDU set information for the independent PDU.

The PDU set information may be used for determining the PDU set associated with the PDU.

In a possible implementation, the PDU set information may be set in the GTP-U header of the PDU.

In a possible implementation, the UPF may identify and send the PDU with the GTP-U header to the radio access network, and the PDU set information in the GTP-U may be used for the radio access network and the like to determine the PDU set to which the PDU belongs.

In an embodiment, the PDU set information is at least used for indicating one of the following: a PDU set sequence number; an indication of an end PDU of the PDU set; a PDU sequence number within the PDU set; a PDU set size in bytes; a PDU set importance value; a sequence number of a start PDU of the PDU set; a sequence number of the end PDU of the PDU set; the number of PDUs in the PDU set; whether a PDU associated with the PDU set information is a PDU incorporated into the PDU set; and an end of a data burst.

The QoS flow identification is used for identifying the QoS flow. Each PDU set in the QoS flow is identified by a PDU set sequence number. Each QoS flow may be used for transmitting one or more PDU sets.

For the independent PDU, after the independent PDU is incorporated into the associated PDU set, an identification may be set in the PDU set information of the PDU to indicate that the PDU is incorporated into the PDU set. That is, the PDU set information may indicate not only the PDU set of the PDU, but also whether the PDU is incorporated into the PDU set by the UPF. In a possible implementation, the UPF may determine whether the PDU is provided with the PDU set marking information. In a possible implementation, the PDU associated with the SDF may be sent to the UPF by the AS, etc. The PDU may or may not be provided with the PDU set marking information.

The UPF may determine whether the received PDU is provided with the PDU set marking information.

In a possible implementation, the UPF may check whether the packet header of the PDU is provided with the PDU set marking information.

In a possible implementation, the PDU is provided with the PDU set marking information, and the UPF may determine the PDU set to which the PDU belongs based on the PDU set marking information.

In a possible implementation, the PDU is not provided with the PDU set marking information, and the UPF incorporates the PDU into the PDU set associated with the PDU.

In an embodiment, the PDU set marking information includes a header extension of the PDU, where the header extension is used for indicating at least one of the following:
an end PDU of the PDU set; an end of a data burst; a PDU set importance value; a PDU set sequence number; a PDU sequence number within the PDU set; and a PDU set size in bytes.

In a possible implementation, the header extension is used for the UPF to determine the PDU set to which the PDU belongs. The UPF may determine the PDU set to which the PDU belongs based on the header extension of the PDU.

In a possible implementation, the UPF may interpret the header extension based on the protocol description and/or the PDR used for identifying the PDU set, and determine the PDU set to which the PDU belongs based on the interpreted header extension.

The UPF may determine, based on whether the PDU is provided with the PDU set marking information, whether the PDU is provided with a PDU set to which the PDU belongs.

By determining whether the PDU is provided with the PDU set marking information, the core network device may classify PDUs with and without PDU sets, and further process the PDU without the PDU set, reducing the uncertainty in the execution policy of the QoS profile and the QoS parameters caused by the unified processing of PDUs with and without PDU sets, which cannot guarantee the QoS of the QoS flow.

In an embodiment, the PDU set associated with the PDU is determined based on one of the following:
a protocol description associated with the PDU sent by an AF; and packet header information of the PDU.

In a possible implementation, the PDU set associated with the PDU may be determined based on the protocol description associated with the PDU and/or the packet header information of the PDU.

In a possible implementation, the header extension of the PDU may be in the packet header information of the PDU, or the header extension of the PDU may be outside the packet header information of the PDU. The header extension of PDU is used for extending information outside the packet header information of the traditional PDU.

For example, the protocol description associated with the PDU and/or the packet header information of the PDU may be used for carrying indication information that determines the PDU set associated with the PDU, such as the PDU's SDF, QoS parameters, etc. The core network device may determine the PDU set associated with the PDU based on the indication information.

In an embodiment, the PDU is incorporated by the core network device through one of the following:
determining, by the core network device, that the PDU is associated with a plurality of PDU sets, duplicating, by the core network device, the PDU into a plurality of PDUs, and incorporating, by the core network device, the plurality of PDUs into all of the PDU sets associated with the PDU; and
determining, by the core network device, that the PDU is associated with a plurality of PDU sets, and incorporating, by the core network device, the PDU into a PDU set, in the plurality of PDU sets associated with the PDU, having a predetermined association relationship.

If there is one PDU set associated with the independent PDU, the PDU may be incorporated into that PDU set.

In a possible implementation, if the PDU needs to be incorporated into a plurality of PDU sets, the PDU may be duplicated into a plurality of PDUs, and each of the plurality of PDUs is incorporated into one of the plurality of PDU sets.

In an embodiment, the predetermined association relationship includes at least one of the following:
a time difference between a first time point at which a PDU set associated with the PDU arrives at the core network device and a second time point at which the PDU arrives at the core network device being within a predetermined time difference range;
having a predetermined association value or having a predetermined importance value, where the predetermined association value or the predetermined importance value is indicated by one of: a UPF, a PCF, and an AF;
a PDU set indicated by the UPF; and
a PDU set indicated by the AF.

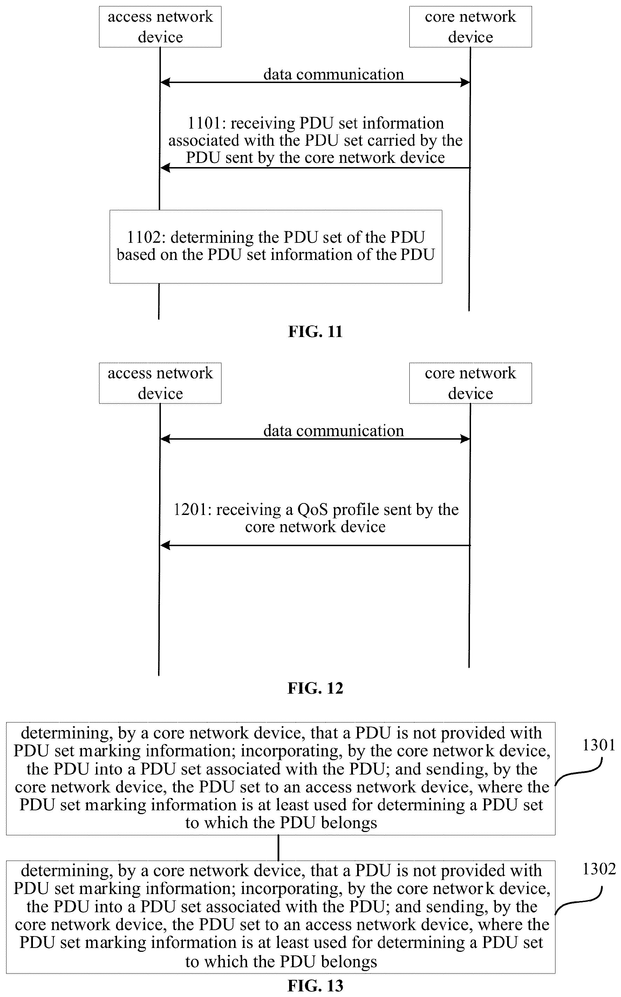

As shown in FIG. 11, an embodiment of the present disclosure provides an information processing method. The method is performed by the access network function node, and includes the following steps 1101 to 1102.

At step 1101, PDU set information associated with the PDU set carried by the PDU sent by the core network device is received.

At step 1102, the PDU set of the PDU is determined based on the PDU set information of the PDU.

When sending the PDU to the radio access network function, the UPF may simultaneously send the PDU set information of the PDU. In some embodiments, the PDU set information is determined by the UPF at least based on the protocol description, and the QoS parameter, etc. of the PDU set of the PDU.

In a possible implementation, the UPF adds the PDU set information to the GTP-U of the PDU.

The access network device obtains the PDU set information from the GTP-U header of the PDU as received, and then determines the PDU set to which the PDU belongs. The radio access network function may perform, on the PDU, the PDU set based QoS handling.

In a possible implementation, the UPF maps PDUs associated with a same SDF to a same QoS flow.

In an embodiment, the SMF may configure a same QoS parameter for all PDU sets in the same QoS flow.

When configuring the PDU set, the UPF may map all PDUs belonging to the same SDF to the same QoS flow.

For example, for the real-time imaging service, the same QoS flow may be configured for the PDU sets of the service. The UPF may map the PDUs of the same SDF to one QoS flow. In this way, the QoS parameters of all PDUs of the SDF are the same. For example, the PDU sets of the same SDF may have the same latency requirement, which reduces latency and improves the synchronization level of the real-time imaging service.

At the same time, in the same QoS flow, the UPF may configure each PDU set to use the same QoS parameter, reducing the processing complexity.

In a possible implementation, the core network device receives a QoS parameter and/or a protocol description of the PDU set sent by an AF, and the core network device determines, based on the QoS parameter and/or the protocol description, the PDU set information associated with the PDU set.

In a possible implementation, the QoS parameter may be carried in the PDU set related auxiliary information.

In a possible implementation, the QoS parameter may be carried in the PDU set related auxiliary information and sent to the core network device.

The PDU set related auxiliary information may be used for indicating the QoS parameter of the PDU set for different QoS flows.

In a possible implementation, the QoS parameter includes, but is not limited to, one of the following: an PDU set handling indication (indicating whether the PDU set based handling should be activated for the data flow), where the PDU set handling indication may also be implicitly indicated through any PDU set related association information provided by the AF; whether the application layer requires all PDUs to use the PDU sets; the PDU set DBP; and the PDU set error rate.

In a possible implementation, the PDU set information may be set in the PDU of the PDU set for the network device to identify the PDU set to which the PDU belongs.

The PDU set information may include at least one of the following: a PDU set sequence number; an indication of an end PDU of the PDU set; a PDU sequence number within a PDU set; a PDU set Size in bytes; a PDU set importance, used for identifying the relative importance of the PDU set compared to other PDU sets in the QoS flow; a sequence number of a start PDU and a sequence number of an end PDU in the PDU set, here, each QoS flow has a QoS flow representation, each PDU set in the QoS flow is identified by a PDU set sequence number, and each QoS flow may be used for transmitting one or more sets of PDUs; the number of PDUs in the PDU set; a PDU set importance; and an end of a data burst.

In an embodiment, receiving, by the core network device, the QoS parameter and/or the protocol description of the PDU set sent by the AF includes:
receiving, by a PCF, the QoS parameter and/or the protocol description of the PDU set sent by the AF.

Determining, based on the QoS parameter and/or the protocol description, the PDU set information associated with the PDU set includes:
determining, by the PCF based on the QoS parameter and/or the protocol description, a PCC rule associated with the PDU set, and sending, by the PCF, the PCC rule to an SMF;
determining, by the SMF based on the PCC rule, an N4 rule associated with the PDU set, and sending, by the SMF, the N4 rule to the UPF; and
determining, by the UPF based on the N4 rule, the PDU set information associated with the PDU set.

The AF may send to the PCF the QoS parameter and/or the protocol description through the Nnef_AFsessionWithQoS_Create request.

The AF may also provide the QoS parameter and/or the protocol description to the PCF before a PDU session is established. The QoS parameter and/or the protocol description of the PDU set provided by the AF may be used for the PCF to determine the PCC rule.

When performing the PDU set based QoS handling for the SDF, the PCF may generate, based on the QoS parameter and/or the protocol description, the PCC rule including the PDU set QoS parameter (such as PSER, PSDB, and PSIHI), and send the PCC rule to the SMF, and the SMF determines the N4 rule based on the PCC rule.

In a possible implementation, the SMF may be configured to support the QoS of the PDU set in the case where the SMF does not receive the PCC rule from the PCF. For example, the SMF may configure the N4 rule based on the general QoS parameter of the PDU set when the PCC associated with the PDU set is not received.

The N4 rule is used for the UPF to perform the QoS handling of the PDU set.

Based on the N4 rule, the UPF may identify the PDU set to which each PDU belongs, and the PDU set information of each PDU set.

In a possible implementation, the UPF determines the PDU set information through one of the following: matching the RTP/STP header and the payload; matching the new RTP extension header; the information provided by the AS in the N6 encapsulation header; the detection based on the traffic characteristic; and the implementation based on the UPF local configuration.

In a possible implementation, the PCF may receive, during the PDU session establishment and/or the PDU session modification, the QoS parameter and/or the protocol description of the PDU set sent by the AF, and determine the PCC; and the SMF determines the N4 rule based on the PCC.

As shown in FIG. 12, an embodiment of the present disclosure provides an information processing method. The method is performed by the access network function node, and includes the following step 1201.

At step 1201, a QoS profile sent by the core network device is received.

In a possible implementation, the SMF in the core network device determines, based on the PCC rule, the QoS profile associated with the PDU set. The SMF sends the QoS profile to the access network device.

In a possible implementation, the QoS profile may include the QoS parameter and/or the QoS policy and/or the protocol description associated with the PDU set.

In a possible implementation, sending, by the SMF, the QoS profile to the access network device includes at least one of the following:
sending, by the SMF, the QoS profile to the access network device via the AMF;
alternatively, via the UPF, where the UPF may send the QoS profile to the RAN via the downlink GTP-U header of the PDU.

When performing the PDU set based QoS handling for the SDF, the PCF may generate, based on the QoS parameter and/or the protocol description, the PCC rule including the PDU set QoS parameter (such as PSER, PSDB, and PSIHI), and send the PCC rule to the SMF, and the SMF determines the QoS profile based on the PCC rule.

In a possible implementation, the SMF may be configured to support the QoS of the PDU set in the case where the SMF does not receive the PCC rule from the PCF. For example, the SMF may determine the QoS profile based on the general QoS parameter of the PDU set when the PCC associated with the PDU set is not received.

The QoS profile is used for the access network device to determine the QoS parameter and the like of the PDU set.

As shown in FIG. 13, an embodiment of the present disclosure provides an information processing method including the following steps 1301 to 1302.

At step 1301, a core network device determines that a PDU is not provided with PDU set marking information, incorporates the PDU into a PDU set associated with the PDU, and sends the PDU set to an access network device, where the PDU set marking information is at least used for determining a PDU set to which the PDU belongs.

At step 1302, the access network device receives the PDU set sent by the core network device.

The optional implementations of step 1301 may refer to the optional implementations of each step in FIGS. 2 to 9, as well as other related parts in the embodiments involved, which will not be repeated here.

The optional implementations of step 1302 may refer to the optional implementations of each step in FIGS. 10 to 13, as well as other related parts in the embodiments involved, which will not be repeated here.

The following provides a plurality of specific examples based on any of the above embodiments.

The UPF identifies the PDUs with or without the header extension for the marking of the PDU sets and/or the end of bursts in the XRM SDF. The PDU may be a PDU session anchor (PSA) PSA UPF.

If the UPF receives a PDU without the header extension, the UPF combines the PDU into the related PDU set. That is, the PDU will not be allocated as a separate PDU set in the same QoS flow. The header extension is used for marking the PDU set based on the protocol description and/or the packet detection rule (PDR) for the PDU set identification.

If there are more than one dependency/related PDU sets, the PDU without the header extension will be,
alternative 1: duplicated into all of the dependency PDU sets; or
alternative 2: mapped/encapsulated into one of these PDU sets which have the dependency with the PDU. The encapsulated PDU set may be the PDU set arrived at a similar time, or the PDU set of the high importance and dependency identified by the UPF or indicated by the PCF/AF, or the default PDU set indicated by the UPF/AF.

The header extension of the PDU for the marking of the PDU set (and/or the end of bursts) includes at least one of the following: an end PDU of the PDU set, an end of the data burst, a PDU set importance value, a PDU set sequence number, a PDU sequence number within a PDU set, and a PDU set size.

The PDUs with and without the header extension in the same SDF will be mapped to the same QoS flow. The PDU set QoS parameter (e.g., PSER, PSDB and PSIHI) of the QoS flow is applied to all of the PDU sets in the QoS flow. The header extension is used for marking the PDU set and/or the end of bursts.

When the PDU set based QoS handling is performed for an SDF of the XRM service, the PCF generates a PCC rule including the PDU set QoS parameters (PSER, PSDB and PSIHI), and sends the PCC rule to the SMF for the QoS profile determination. Alternatively, the SMF may be configured to support the PDU set QoS without receiving the PCC rule from the PCF.

The QoS parameter and the protocol description provided by the AF may be used for the PCC rule determination in the PCF, as well as for the PDU set information indemnification by the UPF.

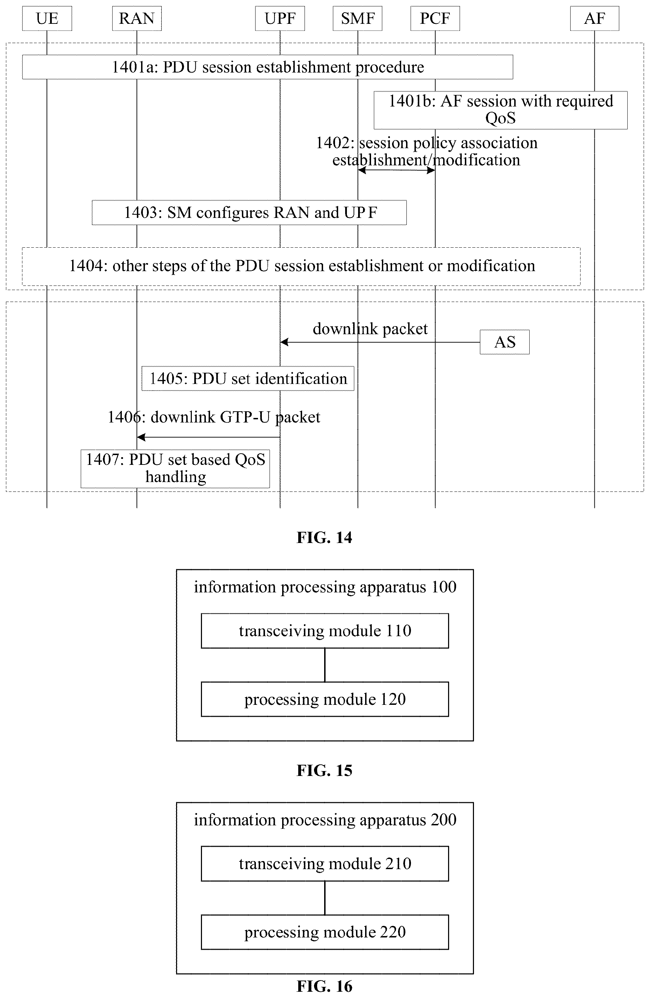

The QoS handling of the PDU set, as shown in FIG. 14, includes the following steps 1401 to 1407.

At step 1401a, a PDU session is established. Here, the steps for establishing a PDU session may be similar to the process of establishing a PDU session in the related arts, and will not be repeated here.

At step 1401b, the AF may send information (QoS parameters for the PDU set within the corresponding SDF, and related parameters about QoS requirements) to the PCF through the Nnef_AFsessionWithQoS_Create request. The AF may also provide the information to the 5GS before a PDU session is established. The information includes the protocol description and the PDU set related auxiliary information. The PDU set related auxiliary information may include the QoS parameter of the PDU set in the QoS flow:
an PDU set handling indication (indicating whether the PDU set based handling should be activated for the flow), where the indication may be implicitly indicated through other PDU set related information provided by the AF;
whether all PDUs are needed for the usage of the PDU set by the application layer;
the PDU set delay budget;
the PDU set error rate.

At step 1402, the PCF generates an appropriate PCC rule, which may include the PDU set related QoS parameter (as follows). The PCF sends the PCC rules to the SMF.

When the PDU set based QoS handling is performed for an SDF of the XRM service, the PCF generates a PCC rule including the PDU set QoS parameters (PSER, PSDB and PSIHI), and sends the PCC rule to the SMF for the QoS profile determination. Alternatively, the SMF may be configured to support the PDU set QoS without receiving the PCC rule from the PCF. The PDU set QoS parameter and the protocol description provided by the AF may be used for the PCF to determine the PCC rule.

In some embodiments, in the 5G communication system, the QoS parameter of the PDU used for the PDU set QoS handling includes, but is not limited to, at least one of the following: the PSDB, the PSER, the indication of whether all PDUs are needed for the usage of the PDU set by the application layer, and the indication of whether to drop a PDU set in the case where the PSDB is exceeded.

The step 1402 may be implemented during the PDU session establishment procedure, or may be implemented during the PDU session modification procedure.

If this step is triggered by step 121b, the PCF generates the PCC rule based on the information provided by the AF.

At step 1403, the SMF generates the QoS profile and the N4 rule based on the PCC rule from the PCF. The SMF sends the N4 rule to the UPF, and sends the QoS profile to the radio access network (RAN) node via the AMF.

The protocol description and the PDU set related auxiliary information (including the QoS parameter) are sent to the SMF as a part of the PCC rule.

The SMF sends them (the protocol description and the PDU set related auxiliary information) to the NG-RAN via the AMF as a part of the QoS profile.

The step 1403 may be implemented during the PDU session establishment procedure, or may be implemented during the PDU session modification procedure.

At step 1404, other steps of the PDU session establishment or modification procedures may be similar to the session creation or session modification procedures in the related arts, and will not be repeated here.

At step 1405, based on the received N4 rule or the local configuration on the UPF, the UPF identifies the PDU set information, and performs the PDU set based QoS handling according to the N4 rule instruction.

The QoS parameter and the protocol description of the PDU set provided by the AF may be used for the PDU set information indemnification by the UPF.

The UPF identifies that a PDU belongs to a PDU set, and identifies information for each PDU set, including but not limited to at least one of the following:
a PDU set sequence number; a QoS flow identification used for identifying a QoS flow, where each PDU set in the QoS flow is identified by a PDU set sequence number, and each QoS flow may be used for transmitting one or more PDU sets; an indication of an end PDU of the PDU set; a PDU sequence number within the PDU set; a PDU set size in bytes; a PDU set importance value; a sequence number of a start PDU of the PDU set; a sequence number of the end PDU of the PDU set; the number of PDUs in the PDU set; whether a PDU associated with the PDU set information is a PDU incorporated into the PDU set; and an end of a data burst.

The UPF determines the PDU set information through at least one of the following methods/mechanisms:
matching the RTP/STP header and the payload; matching the new RTP extension header; the information provided by the AS in the N6 encapsulation header; the detection based on the traffic characteristic; and the implementation based on the UPF local configuration.

The UPF (e.g., PSA UPF) identifies PDUs with or without the header extension. The extension header is used for marking the PDU set and/or the end of the burst in the XRM SDF.

If the UPF receives a PDU without the header extension, the UPF combines the PDU into the related PDU set (that is, the PDU will not be allocated as a separate PDU set in the same QoS flow). The header extension is used for marking the PDU set based on the protocol description and/or the PDR for the PDU set identification.

If there are more than one dependency/related PDU sets (more than one PDU related PDU sets), the one or more PDUs without the header extension will be,
duplicated into all of the dependency PDU sets; or
mapped/encapsulated into one of the PDU sets which have the dependency with the PDU. The encapsulated PDU set may be the PDU set arrived at a similar time, or the PDU set of the high importance and dependency identified by the UPF or indicated by the PCF/AF, or the default PDU set indicated by the UPF/AF.

The header extension of the PDU for the marking of the PDU set (and/or the end of bursts) include at least one of the following:
an end PDU of the PDU set ([E]), an end of the data burst ([EDB]), a PDU set importance ([PSI]), a PDU set sequence number ([PSN]), a PDU sequence number within a PDU set ([PSN]), and a PDU set size ([PSize]).

The PDUs with and without the header extension for the marking of the PDU set and/or the end of bursts in the same SDF will be mapped to the same QoS flow. The PDU set QoS parameter (e.g., PSER, PSDB and PSIHI) of the QoS flow is applied to all of the PDU sets in the QoS flow.

At step 1406, the UPF sends the PDU set information to the RAN. The UPF provides the above PDU set information to the RAN. For the PDU set information in step 125, the UPF adds it to the GTP-U header.

At step 1407, based on the PDU set information received in step 126, the RAN performs the PDU set based QoS handling.

As shown in FIG. 15, an embodiment of the present disclosure provides an information processing apparatus 100. The apparatus is provided in a core network device, and includes:
a processing module 110, configured to determine that a PDU is not provided with PDU set marking information, and incorporate the PDU into a PDU set associated with the PDU, where the PDU set marking information is at least used for determining a PDU set to which the PDU belongs.

In an embodiment, the processing module is further configured to determine the PDU set associated with the PDU.

In an embodiment, the processing module is specifically configured to:
determine that the PDU is associated with a plurality of PDU sets, duplicate the PDU into a plurality of PDUs, and incorporate the plurality of PDUs into all of the plurality of PDU sets associated with the PDU; and
determine that the PDU is associated with a plurality of PDU sets, and incorporate the PDU into a PDU set, in the plurality of PDU sets associated with the PDU, having a predetermined association relationship.

In an embodiment, the predetermined association relationship includes at least one of the following:
a time difference between a first time point at which a PDU set associated with the PDU arrives at the core network device and a second time point at which the PDU arrives at the core network device being within a predetermined time difference range;
having a predetermined association value or having a predetermined importance value, where the predetermined association value or the predetermined importance value is indicated by one of: a UPF, a PCF, and an AF;
a PDU set indicated by the UPF; and
a PDU set indicated by the AF.

In an embodiment, the PDU set associated with the PDU is determined based on one of the following:
a protocol description associated with the PDU sent by an AF; and packet header information of the PDU.

In an embodiment, the processing module is specifically configured to:
set PDU set information for the PDU, where the PDU set information corresponds to the PDU set associated with the PDU.

In an embodiment, the PDU set information is at least used for indicating one of the following: a PDU set sequence number; an indication of an end PDU of the PDU set; a PDU sequence number within the PDU set; a PDU set size in bytes; a PDU set importance value; a sequence number of a start PDU of the PDU set; a sequence number of the end PDU of the PDU set; a number of PDUs in the PDU set; whether a PDU associated with the PDU set information is a PDU incorporated into the PDU set; and an end of a data burst.

In an embodiment, the PDU set marking information includes a header extension of the PDU, and the header extension is used for indicating at least one of the following:
an end PDU of the PDU set; an end of a data burst; a PDU set importance value; a PDU set sequence number; a PDU sequence number within the PDU set; and a PDU set size in bytes.

In an embodiment, the processing module is further configured to:
map PDUs associated with a same SDF to a same QoS flow.

In an embodiment, all PDU sets in the same QoS flow use a same QoS parameter.

In an embodiment, the apparatus further includes:
a transceiving module 120, configured to receive a QoS parameter and/or a protocol description of the PDU set sent by an AF; where
the processing module is further configured to determine, based on the QoS parameter and/or the protocol description, PDU set information associated with the PDU set.

In an embodiment, the transceiving module is specifically configured to receive, through a PCF, the QoS parameter and/or the protocol description of the PDU set sent by the AF;
the transceiving module is specifically configured to determine, through the PCF based on the QoS parameter and/or the protocol description, a PCC rule associated with the PDU set, and send, through the PCF, the PCC rule to an SMF;
the transceiving module is specifically configured to determine, through the SMF based on the PCC rule, an N4 rule associated with the PDU set, and send, through the SMF, the N4 rule to a UPF; and
the processing module is specifically configured to determine, through the UPF based on the N4 rule, the PDU set information associated with the PDU set.

In an embodiment, the processing module is specifically configured to determine, through the SMF based on the PCC rule, a QoS profile associated with the PDU set; and
the transceiving module is specifically configured to send, through the SMF, the QoS profile to an access network device.

In an embodiment, the transceiving module is further configured to send the PDU carrying PDU set information to an access network device, where the PDU set information is used for the access network device to determine the PDU set of the PDU.

In an embodiment, the transceiving module is further configured to send the PDU set to an access network device, where the PDU set includes at least one PDU.

In an embodiment, the processing module is further configured to determine whether the PDU is provided with the PDU set marking information.

As shown in FIG. 16, an embodiment of the present disclosure provides an information processing apparatus 200. The apparatus is provided in an access network device, and includes:
a transceiving module 210, configured to receive a PDU set sent by a core network device, where the PDU set includes a PDU not provided with PDU set marking information, and the PDU set marking information is at least used for determining a PDU set to which the PDU belongs.

In an embodiment, the PDU is incorporated by the core network device into the PDU set associated with the PDU.

In an embodiment, the PDU set associated with the PDU is determined by the core network device.

In an embodiment, the PDU is incorporated by the core network device by using one of:
determining, by the core network device, that the PDU is associated with a plurality of PDU sets, duplicating, by the core network device, the PDU into a plurality of PDUs, and incorporating, by the core network device, the plurality of PDUs into all of the PDU sets associated with the PDU; and
determining, by the core network device, that the PDU is associated with a plurality of PDU sets, and incorporating, by the core network device, the PDU into a PDU set, in the plurality of PDU sets associated with the PDU, having a predetermined association relationship.

In an embodiment, the predetermined association relationship includes at least one of:
a time difference between a first time point at which a PDU set associated with the PDU arrives at the core network device and a second time point at which the PDU arrives at the core network device being within a predetermined time difference range;
having a predetermined association value or having a predetermined importance value, where the predetermined association value or the predetermined importance value is indicated by one of: a UPF, a PCF, and an AF;
a PDU set indicated by the UPF; and
a PDU set indicated by the AF.

In an embodiment, the PDU set associated with the PDU is determined based on one of:
a protocol description associated with the PDU sent by the AF; and packet header information of the PDU.

In an embodiment, the PDU is incorporated by the core network device into the PDU set associated with the PDU, including:
setting, by the core network device, PDU set information for the PDU, where the PDU set information corresponds to the PDU set associated with the PDU.

In an embodiment, the PDU set information is at least used for indicating one of:
a PDU set sequence number; an indication of an end PDU of the PDU set; a PDU sequence number within the PDU set; a PDU set size in bytes; a PDU set importance value; a sequence number of a start PDU of the PDU set; a sequence number of the end PDU of the PDU set; a number of PDUs in the PDU set; whether a PDU associated with the PDU set information is a PDU incorporated into the PDU set; and an end of a data burst.

In an embodiment, the PDU set marking information includes a header extension of the PDU, and the header extension is used for indicating at least one of:
an end PDU of the PDU set; an end of a data burst; a PDU set importance value; a PDU set sequence number; a PDU sequence number within the PDU set; and a PDU set size in bytes.

In an embodiment, the transceiving module is further configured to receive a QoS profile sent by the core network device.

In an embodiment, the transceiving module is further configured to receive PDU set information associated with the PDU set carried by the PDU sent by the core network device; and
the apparatus further includes a processing module 220 configured to determine the PDU set of the PDU based on the PDU set information of the PDU.

An embodiment of the present disclosure provides a communication device, including:
a processor; and
a memory, configured to store an executable instruction of the processor;
where the processor, when executing the executable instruction, is configured to implement the information processing method of any embodiment of the present disclosure.

In an embodiment, the communication device may include, but is not limited to, at least one of the following: a network control repeater and a network device. Here, the network device may include a core network or an access network device. Here, the access network device may include a base station. The core network may include an AMF and an SMF.

In some embodiments, the processor may include various types of storage media, where the storage media are non-transitory computer storage media capable of continuing to memorize information stored therein after the user device is powered down.

The processor may be connected to the memory via a bus or the like for reading an executable program stored in the memory, for example, at least one of the methods shown in FIGS. 2 to 12.

An embodiment of the present disclosure also provides a computer storage medium, where the computer storage medium stores an executable program of a computer. The executable program, when executed by a processor, implements the information processing method of any embodiment of the present disclosure, for example, at least one of the methods shown in FIGS. 2 to 12.

With respect to the apparatus or storage medium in the above embodiments, the specific manner in which each module performs an operation has been described in detail in the embodiments related to the method, and will not be described in detail herein.

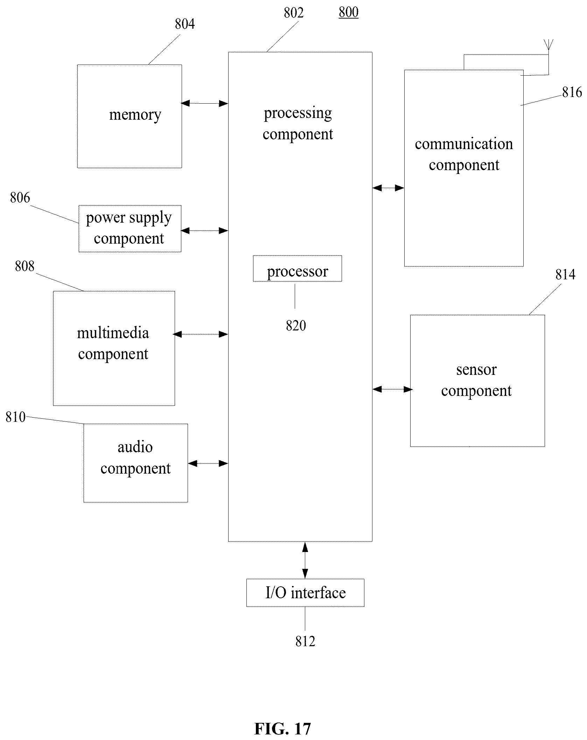

FIG. 17 is a block diagram of a UE 800 illustrated according to an exemplary embodiment. For example, the UE 800 may be a mobile phone, a computer, a digital broadcast user device, a message transceiver device, a game console, a tablet device, a medical device, a fitness device, or a personal digital assistant, etc.

Referring to FIG. 17, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the UE 800, such as operations associated with display, telephone calls, data communication, camera operations, and recording operations. The processing component 802 may include one or more processors 820 to execute an instruction to complete all or some of the steps of the method described above. In addition, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support the operations on the UE 800. Examples of such data include the following: an instruction of any application program or method operated on the UE 800, contact data, phonebook data, messages, pictures, videos, etc. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

In an exemplary embodiment, the UE 800 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, to perform the method described above.

In an exemplary embodiment, a non-transitory computer-readable storage medium including an instruction is provided, such as the memory 804 including an instruction. The instruction described above is capable of being executed by the processor 820 of the UE 800 to complete the method described above. For example, the non-transitory computer-readable storage medium may be an ROM, a random access memory (RAM), a CD-ROM, a magnetic tape, a floppy disk, or an optical data storage device.

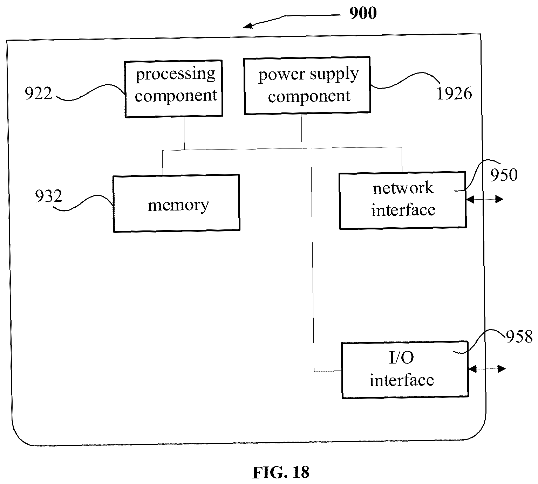

As shown in FIG. 18, an embodiment of the present disclosure illustrates a structure of an access device. For example, the communication device 900 may be provided as a network device. The communication device may be various network elements such as the aforementioned access network elements and/or network functions.

Referring to FIG. 18, the communication device 900 includes a processing component 922, where the processing component 922 further includes one or more processors, and a memory resource represented by a memory 932 for storing an instruction, such as an application program, that is executable by the processing component 922. The application program stored in the memory 932 may include one or more modules each corresponding to a set of instructions. In addition, the processing component 922 is configured to execute the instruction to perform any method described above applied to the access device, for example, any one of the methods shown in FIGS. 2 to 12.

In the absence of contradiction, each step in a certain one of the above embodiments or examples may be implemented as an independent embodiment, and the steps may be arbitrarily combined. For example, a solution obtained by removing some steps from a certain embodiment or example may also be implemented as an independent embodiment. Moreover, the order of steps in a certain embodiment or example may be arbitrarily swapped. Additionally, optional manners or examples in a certain embodiment or example may be arbitrarily combined. Furthermore, the embodiments or examples may be arbitrarily combined, for example, partial or all steps in different embodiments or examples may be freely combined, and a certain embodiment or example may be arbitrarily combined with optional manners or optional examples in other embodiments or examples.

After considering the specification and practicing the invention disclosed herein, those skilled in the art will easily come up with other implementation solutions of the present invention. The present disclosure is intended to cover any variations, uses or adaptive changes of the present invention, and the variations, uses or adaptive changes follow the general principles of the present invention and include common knowledge or commonly used technical means in the technical field that is not disclosed in the present disclosure. The specification and embodiments are only considered to be exemplary, and the true scope and spirit of the present invention are indicated by the following claims.

It should be understood that the present invention is not limited to the precise structure which has been described above and illustrated in the accompanying drawings, and that various modifications and alterations may be made without departing from the scope of the present invention. The scope of the present invention is limited only by the appended claims.

## Claims

1. An information processing method, performed by a core network device, comprising:
determining that a protocol data unit (PDU) is not provided with PDU set marking information; and
incorporating the PDU into a PDU set associated with the PDU, wherein the PDU set marking information is at least used for determining a PDU set to which the PDU belongs.

2. The method according to claim 1, wherein the method further comprises:
determining the PDU set associated with the PDU.

3. The method according to claim 1 or 2, wherein the incorporating the PDU into the PDU set associated with the PDU comprises one of:
determining that the PDU is associated with a plurality of PDU sets, duplicating the PDU into a plurality of PDUs, and incorporating the plurality of PDUs into all of the plurality of PDU sets associated with the PDU; and
determining that the PDU is associated with a plurality of PDU sets, and incorporating the PDU into a PDU set, in the plurality of PDU sets associated with the PDU, having a predetermined association relationship.

4. The method according to claim 3, wherein the predetermined association relationship comprises at least one of:
a time difference between a first time point at which a PDU set associated with the PDU arrives at the core network device and a second time point at which the PDU arrives at the core network device being within a predetermined time difference range;
having a predetermined association value or having a predetermined importance value, wherein the predetermined association value or the predetermined importance value is indicated by one of: a user plane function (UPF), a policy control function (PCF), and an application function (AF);
a PDU set indicated by the UPF; and
a PDU set indicated by the AF.

5. The method according to any one of claims 1 to 4, wherein the PDU set associated with the PDU is determined based on one of:
a protocol description associated with the PDU sent by an AF; and
packet header information of the PDU.

6. The method according to any one of claims 1 to 5, wherein the incorporating the PDU into the PDU set associated with the PDU comprises:
setting PDU set information for the PDU, wherein the PDU set information corresponds to the PDU set associated with the PDU.

7. The method according to claim 6, wherein the PDU set information is at least used for indicating one of:
a PDU set sequence number; an indication of an end PDU of the PDU set; a PDU sequence number within the PDU set; a PDU set size in bytes; a PDU set importance value; a sequence number of a start PDU of the PDU set; a sequence number of the end PDU of the PDU set; a number of PDUs in the PDU set; whether a PDU associated with the PDU set information is a PDU incorporated into the PDU set; and an end of a data burst.

8. The method according to any one of claims 1 to 7, wherein the PDU set marking information comprises a header extension of the PDU, and the header extension is used for indicating at least one of:
an end PDU of the PDU set; an end of a data burst; a PDU set importance value; a PDU set sequence number; a PDU sequence number within the PDU set; and a PDU set size in bytes.

9. The method according to any one of claims 1 to 8, wherein the method further comprises:
mapping PDUs associated with a same service data flow (SDF) to a same quality of service (QoS) flow.

10. The method according to claim 9, wherein all PDU sets in the same QoS flow use a same QoS parameter.

11. The method according to any one of claims 1 to 10, wherein the method further comprises:
receiving a QoS parameter and/or a protocol description of the PDU set sent by an AF; and
determining, based on the QoS parameter and/or the protocol description, PDU set information associated with the PDU set.

12. The method according to claim 11, wherein
the receiving the QoS parameter and/or the protocol description of the PDU set sent by the AF comprises:
receiving, by a PCF, the QoS parameter and/or the protocol description of the PDU set sent by the AF; and
the determining, based on the QoS parameter and/or the protocol description, the PDU set information associated with the PDU set comprises:
determining, by the PCF based on the QoS parameter and/or the protocol description, a policy and charging control (PCC) rule associated with the PDU set, and sending, by the PCF, the PCC rule to a session management function (SMF);
determining, by the SMF based on the PCC rule, an N4 rule associated with the PDU set, and sending, by the SMF, the N4 rule to a UPF; and
determining, by the UPF based on the N4 rule, the PDU set information associated with the PDU set.

13. The method according to claim 12, wherein the method further comprises:
determining, by the SMF based on the PCC rule, a QoS profile associated with the PDU set; and
sending, by the SMF, the QoS profile to an access network device.

14. The method according to any one of claims 1 to 13, wherein the method further comprises:
sending the PDU carrying PDU set information to an access network device, wherein the PDU set information is used for the access network device to determine the PDU set of the PDU.

15. The method according to any one of claims 1 to 14, wherein the method further comprises:
sending the PDU set to an access network device, wherein the PDU set comprises at least one PDU.

16. The method according to any one of claims 1 to 14, wherein the method further comprises:
determining whether the PDU is provided with the PDU set marking information.

17. An information processing method, performed by an access network device, comprising:
receiving a protocol data unit (PDU) set sent by a core network device, wherein the PDU set comprises a PDU not provided with PDU set marking information, and the PDU set marking information is at least used for determining a PDU set to which the PDU belongs.

18. The method according to claim 17, wherein the PDU is incorporated by the core network device into the PDU set associated with the PDU.

19. The method according to claim 1, wherein the PDU set associated with the PDU is determined by the core network device.

20. The method according to claim 17 or 18, wherein the PDU is incorporated by the core network device by using one of:
determining, by the core network device, that the PDU is associated with a plurality of PDU sets, duplicating, by the core network device, the PDU into a plurality of PDUs, and incorporating, by the core network device, the plurality of PDUs into all of the PDU sets associated with the PDU; and
determining, by the core network device, that the PDU is associated with a plurality of PDU sets, and incorporating, by the core network device, the PDU into a PDU set, in the plurality of PDU sets associated with the PDU, having a predetermined association relationship.

21. The method according to claim 20, wherein the predetermined association relationship comprises at least one of:
a time difference between a first time point at which a PDU set associated with the PDU arrives at the core network device and a second time point at which the PDU arrives at the core network device being within a predetermined time difference range;
having a predetermined association value or having a predetermined importance value, wherein the predetermined association value or the predetermined importance value is indicated by one of: a user plane function (UPF), a policy control function (PCF), and an application function (AF);
a PDU set indicated by the UPF; and
a PDU set indicated by the AF.

22. The method according to claim 20, wherein the PDU set associated with the PDU is determined based on one of:
a protocol description associated with the PDU sent by the AF; and
packet header information of the PDU.

23. The method according to any one of claims 17 to 22, wherein the PDU is incorporated by the core network device into the PDU set associated with the PDU, comprising:
setting, by the core network device, PDU set information for the PDU, wherein the PDU set information corresponds to the PDU set associated with the PDU.

24. The method according to claim 23, wherein the PDU set information is at least used for indicating one of:
a PDU set sequence number; an indication of an end PDU of the PDU set; a PDU sequence number within the PDU set; a PDU set size in bytes; a PDU set importance value; a sequence number of a start PDU of the PDU set; a sequence number of the end PDU of the PDU set; a number of PDUs in the PDU set; whether a PDU associated with the PDU set information is a PDU incorporated into the PDU set; and an end of a data burst.

25. The method according to any one of claims 17 to 24, wherein the PDU set marking information comprises a header extension of the PDU, and the header extension is used for indicating at least one of:
an end PDU of the PDU set; an end of a data burst; a PDU set importance value; a PDU set sequence number; a PDU sequence number within the PDU set; and a PDU set size in bytes.

26. The method according to any one of claims 17 to 25, wherein the method further comprises:
receiving a quality of service (QoS) profile sent by the core network device.

27. The method according to any one of claims 17 to 26, wherein the method further comprises:
receiving PDU set information associated with the PDU set carried by the PDU sent by the core network device; and
determining the PDU set of the PDU based on the PDU set information of the PDU.

28. An information processing method, comprising:
determining, by a core network device, that a protocol data unit (PDU) is not provided with PDU set marking information; incorporating, by the core network device, the PDU into a PDU set associated with the PDU; and sending, by the core network device, the PDU set to an access network device, wherein the PDU set marking information is at least used for determining a PDU set to which the PDU belongs; and
receiving, by the access network device, the PDU set sent by the core network device.

29. An information processing apparatus, provided in a core network device, comprising:
a processing module, configured to determine that a protocol data unit (PDU) is not provided with PDU set marking information, and incorporate the PDU into a PDU set associated with the PDU, wherein the PDU set marking information is at least used for determining a PDU set to which the PDU belongs.

30. An information processing apparatus, provided in an access network device, comprising:
a transceiving module, configured to receive a protocol data unit (PDU) set sent by a core network device, wherein the PDU set comprises a PDU not provided with PDU set marking information, and the PDU set marking information is at least used for determining a PDU set to which the PDU belongs.

31. A communication system, comprising a core network device and an access network device, wherein
the core network device is configured to perform the information processing method according to any one of claims 1 to 15; and
the access network device is configured to perform the information processing method according to any one of claims 16 to 25.

32. A communication device, comprising a processor, a transceiver, a memory, and an executable program stored in the memory and executable by the processor, wherein the processor, when executing the executable program, performs the information processing method provided in any one of claims 1 to 16, claims 17 to 27, and claim 28.

33. A computer storage medium, wherein the computer storage medium stores an executable program, and the executable program, when executed by a processor, is capable of implementing the information processing method provided in any one of claims 1 to 16, claims 17 to 27, and claim 28.
